# EUROPEAN PATENT APPLICATION

(11) **EP 4 801 119 A1**
(43) Date of publication of application: **02.09.2026**
(21) Application number: 23956697.9
(22) Date of filing: 28.12.2023
(51) Int. Cl.: H04W 52/02

(54) **WIRELESS BATTERY MANAGEMENT SYSTEM, AND ADAPTIVE LOW-POWER-CONSUMPTION MANAGEMENT METHOD AND SYSTEM**

(30) Priority: 26.10.2023 CN 202311407595
(71) Applicant: Sungiant Automotive Electronics Co., Ltd., Shenzhen, Guangdong 518101 (CN)
(72) Inventor: XU, Tonghui, Shenzhen, Guangdong 518107 (CN); CHEN, Binbin, Shenzhen, Guangdong 518107 (CN)
(74) Representative: Metida
(86) International application number: PCT/CN2023/142594
(87) International publication number: WO 2025/086462

(57) **Abstract**

The present application relates to the technical field of wireless communication, and discloses a wireless battery management system and an adaptive low-power management method and system. The method includes: determining an application scenario of a wireless battery management system, where the application scenario includes at least a user mode, a storage mode, and a factory mode; and selecting a corresponding wireless communication protocol based on the application scenario and performing data communication based on the wireless communication protocol. The storage mode corresponds to a first wireless communication protocol. The first wireless communication protocol provides a time base synchronization status with a first preset duration per unit time. The user mode corresponds to a second wireless communication protocol. The second wireless communication protocol provides a time base synchronization status with a second preset duration per unit time. The factory mode corresponds to a third wireless communication protocol. The third wireless communication protocol provides a time base synchronization status with a third preset duration per unit time. This method can not only dynamically adjust power consumption of the wireless battery management system, but also be compatible with its wireless communication requirement.

## Description

### CROSS REFERENCE TO RELATED APPLICATION

The present application claims priority to Chinese Patent Application No. 202311407595.8, filed with the China National Intellectual Property Administration (CNIPA) on October 26, 2023 and entitled "WIRELESS BATTERY MANAGEMENT SYSTEM AND ADAPTIVE LOW-POWER MANAGEMENT METHOD AND SYSTEM", which is incorporated herein by reference in its entirety.

### TECHNICAL FIELD

The present application relates to the technical field of wireless communication, and in particular, to a wireless battery management system and an adaptive low-power management method and system.

### BACKGROUND

At present, with vigorous development of electric vehicles in the renewable energy field, harnesses used for communication in new energy vehicles are becoming increasingly numerous and complex. Consequently, product issues stemming from harness connections are also on the rise. A solution of implementing connections through wireless communication is gaining growing favor among new energy vehicle manufacturers. There is also increasing advocacy among vehicle manufacturers for using a wireless communication solution in a battery management system of a new energy vehicle.

However, wireless communication requires power consumption, and a battery life of a wireless communication device becomes a key to limiting its usage time and efficiency. Most existing wireless communication management strategies rely solely on reducing a transmit power and standby time to reduce battery power consumption. However, this approach has no significant effect and can easily lead to degraded communication quality, thereby affecting device usage efficiency. Therefore, a solution is urgently needed to resolve the foregoing problem.

### SUMMARY

The present application provides a wireless battery management system and an adaptive low-power management method and system, to resolve the following problem: An existing wireless communication management strategy relies on reducing a transmit power and standby time to reduce battery power consumption. However, this approach has no significant effect and can easily lead to degraded communication quality, thereby affecting device usage efficiency.

To resolve the foregoing technical problem, a first aspect of the present application provides a method for adaptive low-power management, including:
determining an application scenario of a wireless battery management system, where the application scenario includes at least a user mode, a storage mode, and a factory mode; and
selecting a corresponding wireless communication protocol based on the application scenario and performing data communication based on the wireless communication protocol.

When the wireless battery management system is in the storage mode, a first wireless communication protocol is selected. The first wireless communication protocol provides a time base synchronization status with a first preset duration per unit time.

When the wireless battery management system is in the user mode, a second wireless communication protocol is selected. The second wireless communication protocol provides a time base synchronization status with a second preset duration per unit time.

When the wireless battery management system is in the factory mode, a third wireless communication protocol is selected. The third wireless communication protocol provides a time base synchronization status with a third preset duration per unit time.

In some embodiments, after the selecting a corresponding wireless communication protocol based on the application scenario and performing data communication based on the wireless communication protocol, the method further includes:
when the wireless battery management system is in the user mode, monitoring a parameter of a wireless communication signal generated when the wireless battery management system interacts with an external device, where the parameter includes a received signal strength and a packet error rate; and
controlling a transmit power of the wireless communication signal by adjusting the parameter.

In some embodiments, the controlling a transmit power of the wireless communication signal by adjusting the parameter includes:
obtaining a correspondence between the parameter and the transmit power of the wireless communication signal;
adjusting the transmit power of the wireless communication signal until the packet error rate of the wireless communication signal is zero, and obtaining a real-time received signal strength of the wireless communication signal at a current moment;
comparing the real-time received signal strength with a threshold of the received signal strength of the wireless communication signal and obtaining a difference; and
adjusting the transmit power of the wireless communication signal based on the correspondence and the difference until the difference is zero.

In some embodiments, the determining an application scenario of a wireless battery management system includes:
determining the application scenario based on a status of a wireless communication network in the wireless battery management system.

When the wireless communication network transitions from a connected state to a disconnected state within a first preset time period, the application scenario is the factory mode.

When the wireless communication network is in the connected state within a second preset time period, the application scenario is the user mode.

When the wireless communication network is in a disconnected state within a third preset time period, the application scenario is the storage mode.

In some embodiments, the first wireless communication protocol defines that each data packet includes a first preset quantity of superframes and a second preset quantity of synchronization frames per unit time. The superframes are used for data transmission in a wireless communication process. The synchronization frames are used for time base synchronization in the wireless communication process. The second wireless communication protocol defines that each data packet includes the first preset quantity of superframes and a third preset quantity of synchronization frames per unit time. The third wireless communication protocol defines that each data packet includes the first preset quantity of superframes and a fourth preset quantity of synchronization frames per unit time.

A second aspect of the present application provides an adaptive low-power management system, including:
an application scenario determining module configured to determine an application scenario of a wireless battery management system, where the application scenario includes at least a user mode, a storage mode, and a factory mode; and
a communication protocol selection module configured to select a corresponding wireless communication protocol based on the application scenario and perform data communication based on the wireless communication protocol.

When the wireless battery management system is in the storage mode, a first wireless communication protocol is selected. The first wireless communication protocol provides a time base synchronization status with a first preset duration per unit time.

When the wireless battery management system is in the user mode, a second wireless communication protocol is selected. The second wireless communication protocol provides a time base synchronization status with a second preset duration per unit time.

When the wireless battery management system is in the factory mode, a third wireless communication protocol is selected. The third wireless communication protocol provides a time base synchronization status with a third preset duration per unit time.

In some embodiments, the adaptive low-power management system further includes a signal parameter monitoring module and a transmit power adjustment module.

The signal parameter monitoring module is configured to: when the wireless battery management system is in the user mode, monitor a parameter of a wireless communication signal generated when the wireless battery management system interacts with an external device. The parameter includes a received signal strength and a packet error rate.

The transmit power adjustment module is configured to control a transmit power of the wireless communication signal by adjusting the parameter.

In some embodiments, the transmit power adjustment module includes a correspondence obtaining module, a received signal strength obtaining module, a comparison and difference obtaining module, and a cyclic power adjustment module.

The correspondence obtaining module is configured to obtain a correspondence between the parameter and the transmit power of the wireless communication signal.

The received signal strength obtaining module is configured to adjust the transmit power of the wireless communication signal until the packet error rate of the wireless communication signal is zero, and obtain a real-time received signal strength of the wireless communication signal at a current moment.

The comparison and difference obtaining module is configured to compare the real-time received signal strength with a threshold of the received signal strength of the wireless communication signal and obtain a difference.

The cyclic power adjustment module is configured to adjust the transmit power of the wireless communication signal based on the correspondence and the difference until the difference is zero.

A third aspect of the present application provides a wireless battery management system, including: a data acquisition unit, a power management unit, and a wireless communication unit.

The data acquisition unit is configured to acquire first data. The first data includes a voltage and a temperature of a battery module.

The wireless communication unit is configured to perform any one of the methods for adaptive low-power management according to the first aspect, and wirelessly transmit the first data acquired by the data acquisition unit to an external device.

The power management unit is configured to manage power supply to the data acquisition unit and the wireless communication unit.

In some embodiments, the wireless battery management system further includes a communication management unit configured to manage a communication level between the data acquisition unit and the wireless communication unit.

The embodiments of the present application have the following beneficial effects:

The present application provides the wireless battery management system and the adaptive low-power management method and system. In the method for adaptive low-power management, a transmit power of a device is dynamically adjusted based on a value and change of a communication quality parameter of a current wireless communication channel, to reduce meaningless signal transmission consumption. A wireless signal transmission frequency and duration are reduced by optimizing the communication protocol. The wireless signal transmission frequency and duration are properly managed, and a more effective algorithm is used to reduce power consumption of the wireless battery management system. A wireless communication device takes a better sleep management measure based on a status of the wireless battery management system, to minimize energy consumption of the device while ensuring communication efficiency.

### BRIEF DESCRIPTION OF THE DRAWINGS

To describe the technical solutions in the present application more clearly, the following briefly describes the accompanying drawings required for describing the implementations. Apparently, the accompanying drawings in the following description show merely some implementations of the present application. Those of ordinary skill in the art may still derive other drawings based on these accompanying drawings without creative efforts.
FIG. 1 is a flowchart of amethod for adaptive low-power management according to an embodiment of the present application;
FIG. 2 is a flowchart of a method for adaptive low-power management according to another embodiment of the present application;
FIG. 3 is a flowchart of step S4 according to an embodiment of the present application;
FIG. 4 is an apparatus diagram of an adaptive low-power management system according to an embodiment of the present application;
FIG. 5 is an apparatus diagram of an adaptive low-power management system according to another embodiment of the present application;
FIG. 6 is a structural diagram of a transmit power adjustment module 40 according to an embodiment of the present application; and
FIG. 7 is an apparatus diagram of a wireless battery management system according to an embodiment of the present application.

### DETAILED DESCRIPTION

The technical solutions in the embodiments of the present application are clearly and completely described below with reference to the accompanying drawings and the embodiments. Apparently, the described embodiments are merely some rather than all of the embodiments of the present application. All other embodiments obtained by those of ordinary skill in the art based on the embodiments of the present application without creative efforts should fall within the protection scope of the present application.

It should be understood that step numbers in this specification are merely intended to facilitate description, and are not used to limit a sequence of steps.

It should be understood that the terms used in the specification of the present application are merely for the purpose of describing specific embodiments and are not intended to limit the present application. As used in the specification of the present application and the appended claims, the singular forms "a", "an", and "the" are intended to include the plural forms unless the context clearly indicates otherwise.

The terms "include", "contain", and "comprise" indicate existence of a described feature, entirety, step, operation, element, and/or component, but do not exclude existence or addition of one or more other features, entireties, steps, operations, elements, components, and/or sets thereof.

The term "and/or" refers to one of or any combination or all possible combinations of more of items listed in association, and includes these combinations.

In the renewable energy field, a current wireless communication process in the electric vehicle industry has the following problems: 1. A power consumption management strategy is simplistic: Simply controlling a wireless communication device to be intermittently powered on and off and ignoring factors such as a current connection status and working environment of the device result in ineffective power consumption management. 2. A communication protocol is cumbersome: During interconnection, a wireless communication device performs wireless communication based on a fixed cycle and communication format. It is impossible to use a better algorithm to optimize the communication protocol and reduce a load rate. 3. Sleep management is inefficient: A wireless communication device lacks sleep management, operating only in two states: working and non-working. 4. Data transmission quality cannot be ensured: A current power consumption management strategy ignores factors such as a device connection status and a data transmission status. Consequently, data transmission quality cannot be ensured, resulting in impact on communication quality.

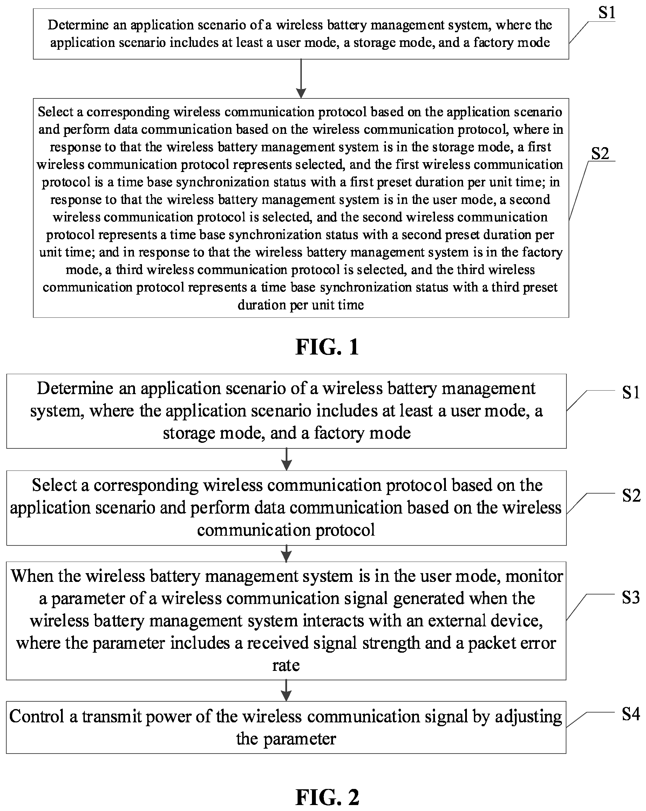

In view of the foregoing problems, in an embodiment, as shown in FIG. 1, a first aspect of the present application provides a method for adaptive low-power management, including the following steps.

S1: Determine an application scenario of a wireless battery management system. The application scenario includes at least a user mode, a storage mode, and a factory mode.

In an embodiment, step S1 includes:
Determine the application scenario based on a status of a wireless communication network in the wireless battery management system.

When the wireless communication network transitions from a connected state to a disconnected state within a first preset time period, the application scenario is the factory mode.

When the wireless communication network is in the connected state within a second preset time period, the application scenario is the user mode.

When the wireless communication network is in a disconnected state within a third preset time period, the application scenario is the storage mode.

Specifically, in the present application, application scenarios of the wireless battery management system are classified into the user mode, the storage mode, and the factory mode. The application scenario is determined based on the status of the wireless network. The three different application scenarios have different power consumption. Power consumption of the storage mode is lower than that of the user mode. Power consumption of the user mode is lower than that of the factory mode.

The factory mode is a mode of an entire wireless battery management system product during production. In this stage, to meet a takt time, the system needs to be able to quickly complete wireless networking while satisfying a testing requirement. That is, the wireless communication network needs to transition from the connected state to the disconnected state within the first preset time period. This mode is used only for factory production and assembly. After a wireless communication management system is established, a primary node rapidly establishes the wireless communication network and disconnects the wireless network in a short time. Therefore, communication between the primary node and a secondary node usually lasts no longer than 5 minutes before the primary node is powered off.

The storage mode is a mode of the entire wireless battery management system product in transit. In this stage, the entire system needs to maintain minimal power consumption. In addition, wireless communication management is not required. However, when transitioning from the storage mode to the user mode, it needs to be able to respond to wireless networking quickly. That is, the wireless communication network needs to be in the disconnected state within the third preset time period. In this mode, the primary node does not request wireless communication networking or disconnect the wireless network. Therefore, it is used only for transportation after production and assembly. A transportation time lasts more than one week. In other words, disconnection between the primary and secondary nodes lasts more than one week.

The user mode is a mode in which the wireless battery management system has been installed in a vehicle. Rapid ignition and departure requirements of personnel need to be satisfied. The system needs to be able to quickly complete wireless networking after each power-on of the vehicle. That is, the wireless communication network needs to be in the connected state within the second preset time period. In this mode, the primary node establishes the wireless communication network in a short time, and basically does not disconnect the wireless network. Therefore, it is used only after the system is installed. In this case, the primary and secondary nodes are not powered off, and a connection between the primary and secondary nodes persists continuously.

The first preset time period, the second preset time period, and the third preset time period are not specifically limited herein. However, the second preset time period and the third preset time period are longer than the first preset time period. In a product application cycle, the factory mode occurs earliest, the storage mode occurs in the middle, and the user mode occurs last. In the foregoing method, the application scenario is determined based on the status of the wireless network. Alternatively, the foregoing three application modes may be distinguished based on conditions such as whether networking is required and whether short-term networking and short-term network disconnection are required. For example, a working status flag is set through software calibration. If wireless networking is connected, and storage mode and user mode flags are not set, the factory mode is entered. If wireless networking is disconnected and there is no wireless communication networking request within a specific time after a factory mode flag or the user mode flag is set, the storage mode is entered and the storage mode flag is set. If wireless networking is connected and the storage mode flag is set, the user mode is entered.

There are various methods for determining the application scenario of the wireless battery management system. The present application merely describes several preferred implementations of the present application, but this should not be construed as limiting the patentable scope of the present application. In addition, in the present application, the application scenarios are classified into a plurality of modes based on a product lifecycle, and a different sleep management measure is matched for each mode, to minimize energy consumption of a device while ensuring communication efficiency.

S2: Select a corresponding wireless communication protocol based on the application scenario and perform data communication based on the wireless communication protocol.

When the wireless battery management system is in the storage mode, a first wireless communication protocol is selected. The first wireless communication protocol provides a time base synchronization status with a first preset duration per unit time.

When the wireless battery management system is in the user mode, a second wireless communication protocol is selected. The second wireless communication protocol provides a time base synchronization status with a second preset duration per unit time.

When the wireless battery management system is in the factory mode, a third wireless communication protocol is selected. The third wireless communication protocol provides a time base synchronization status with a third preset duration per unit time.

Specifically, in the present application, an appropriate wireless communication protocol is selected for management based on the application scenario of the wireless battery management system by determining a communication status and a time base synchronization status in an appropriate scenario, to reduce power consumption. The storage mode corresponds to the first wireless communication protocol. The user mode corresponds to the second wireless communication protocol. The factory mode corresponds to the third wireless communication protocol. The first preset duration, the second preset duration, and the third preset duration are not specifically limited herein. However, a communication requirement can be known based on the status of the wireless network in the wireless battery management system in each application scenario, leading to a conclusion that the first preset duration needs to be greater than the second preset duration and the second preset duration needs to be greater than the third preset duration.

In an embodiment, the first wireless communication protocol defines that each data packet includes a first preset quantity of superframes and a second preset quantity of synchronization frames per unit time. The superframes are used for data transmission in a wireless communication process. The synchronization frames are used for time base synchronization in the wireless communication process. The second wireless communication protocol defines that each data packet includes the first preset quantity of superframes and a third preset quantity of synchronization frames per unit time. The third wireless communication protocol defines that each data packet includes the first preset quantity of superframes and a fourth preset quantity of synchronization frames per unit time.

In the present application, the appropriate wireless communication protocol may further be determined for management by adjusting quantities of the superframes and synchronization frames included in each data packet per unit time in the appropriate scenario, to reduce the power consumption. In the communication process, each data packet includes specific quantities of superframes and synchronization frames. The superframes are used for data transmission. The synchronization frames are used for time base synchronization of wireless communication. A standard wireless communication frame includes 1 superframe and 3 synchronization frames, with communication cycling at this interval. In the present application, the wireless communication protocol is optimized based on a communication status in each application scenario, and efficient sleep management is implemented. For example, in the factory mode, each data packet includes 1 superframe and 1 synchronization frame; in the storage mode, each data packet includes 1 superframe and 10 synchronization frames; and in the user mode, each data packet includes 1 superframe and 3 synchronization frames. In each application scenario, data is transmitted through the superframe, and different synchronization durations are determined through different quantities of synchronization frames. During synchronization frame transmission, the system is sleeping equivalently, to reduce the power consumption.

The foregoing description is based on adjusting the quantity of synchronization frames, namely, a communication frequency per unit time, to reduce the power consumption. In practice, a same effect can also be achieved by adjusting an interval t. For example, an interframe time can be adjusted by changing a time between synchronization frames to n × t or changing a time between a superframe and a synchronization frame to m × t. Details are not described herein.

In the present application, the wireless communication protocol is selected based on the application scenario of the wireless battery management system such that the wireless battery management system has sleep power consumption with different durations in different application scenarios throughout its lifecycle. A wireless signal transmission frequency and duration are reduced by optimizing the communication protocol. The wireless signal transmission frequency and duration are properly managed, and a more effective algorithm is used to reduce the power consumption of the device.

In an embodiment, as shown in FIG. 2, another method for adaptive low-power management includes the following steps:
S1: Determine an application scenario of a wireless battery management system. The application scenario includes at least a user mode, a storage mode, and a factory mode.
S2: Select a corresponding wireless communication protocol based on the application scenario and perform data communication based on the wireless communication protocol.
S3: When the wireless battery management system is in the user mode, monitor a parameter of a wireless communication signal generated when the wireless battery management system interacts with an external device. The parameter includes a received signal strength and a packet error rate.
S4: Control a transmit power of the wireless communication signal by adjusting the parameter.

In the present application, when the wireless battery management system is in the user mode, the transmit power of the wireless communication signal is controlled by monitoring the parameter of the wireless communication signal generated when the wireless battery management system interacts with the external device, to dynamically match an adjusted transmit power and wireless communication transceiving quality. This reduces the transmit power while meeting wireless communication quality, to reduce power consumption of the entire system.

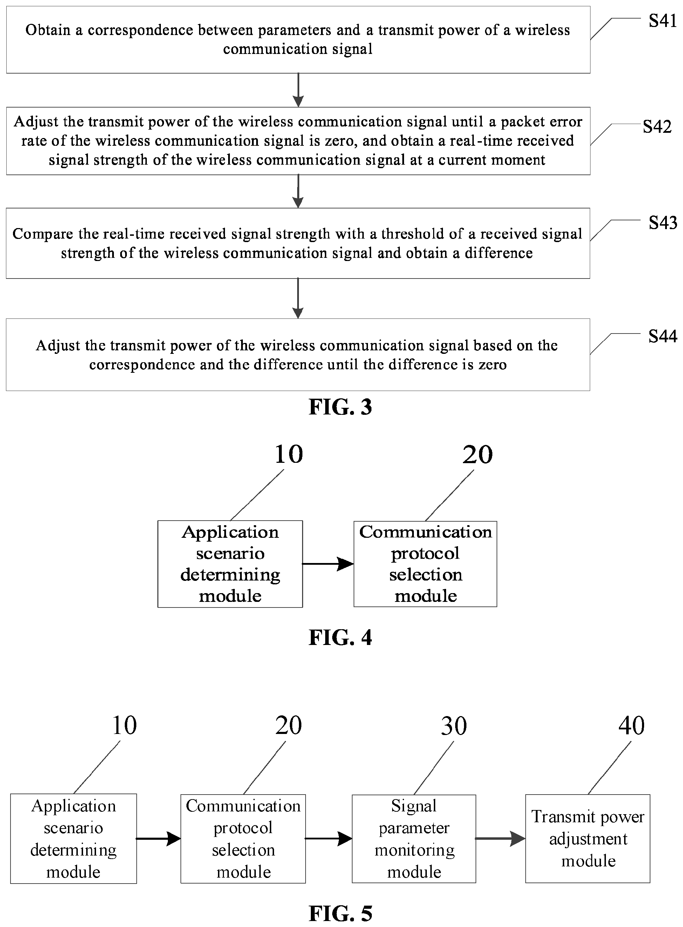

In an embodiment, as shown in FIG. 3, step S4 includes:
S41: Obtain a correspondence between the parameter and the transmit power of the wireless communication signal.
S42: Adjust the transmit power of the wireless communication signal until the packet error rate of the wireless communication signal is zero, and obtain a real-time received signal strength of the wireless communication signal at a current moment.
S43: Compare the real-time received signal strength with a threshold of the received signal strength of the wireless communication signal and obtain a difference.
S44: Adjust the transmit power of the wireless communication signal based on the correspondence and the difference until the difference is zero.

Specifically, after the wireless battery management system is established, if wireless networking is connected, it interacts with a primary node through wireless communication. In this case, the wireless battery management system can monitor a current wireless communication receiving quality Received Signal Strength Indicator (RSSI) parameter and Packet Error Rate (PER) parameter. Before expected implementation of this strategy, a correspondence between a wireless transmit power and the wireless communication receiving quality RSSI parameter and packet error rate PER parameter is first investigated. A transmit power of a wireless communication management system can be appropriately reduced while basic requirements for the wireless communication receiving quality RSSI parameter and packet error rate PER parameter are satisfied, to reduce the power consumption of the entire system.

It is assumed that a threshold of the communication receiving quality RSSI parameter is A when basic wireless communication transceiving quality is ensured and the packet error rate PER parameter is zero. A current transmit power is P. When the wireless communication RSSI parameter of a current channel is greater than A, the wireless transmit power can be reduced. The transmit power may be gradually reduced in a mode of (P - 1), k × P, or another relational expression. When the wireless communication RSSI parameter of a current channel is less than A, the wireless transmit power needs to be increased. The transmit power may be gradually increased in a mode of (P + 1), k × P, or another relational expression. k is a corresponding coefficient. Alternatively, the real-time received signal strength is compared with the threshold of the received signal strength of the wireless communication signal to obtain the difference; and the transmit power of the wireless communication signal is adjusted based on the correspondence and the difference until the difference is zero. In this way, the adjusted transmit power and the wireless communication transceiving quality are dynamically matched. In the present application, a transmit power of a device is dynamically adjusted based on a value and change of a communication quality parameter of a current wireless communication channel, to reduce meaningless signal transmission consumption.

An existing wireless communication management strategy relies on reducing a transmit power and standby time to reduce battery power consumption. However, this approach has no significant effect and can easily lead to degraded communication quality, thereby affecting device usage efficiency. In view of this problem, the method for adaptive low-power management is designed in the embodiments of the present application. The application scenario of the wireless battery management system is determined. The application scenario includes at least the user mode, the storage mode, and the factory mode. The corresponding wireless communication protocol is selected based on the application scenario. Data communication is performed based on the wireless communication protocol. When the wireless battery management system is in the storage mode, the first wireless communication protocol is selected. The first wireless communication protocol represents the time base synchronization status with the first preset duration per unit time. When the wireless battery management system is in the user mode, the second wireless communication protocol is selected. The second wireless communication protocol represents the time base synchronization status with the second preset duration per unit time. When the wireless battery management system is in the factory mode, the third wireless communication protocol is selected. The third wireless communication protocol represents the time base synchronization status with the third preset duration per unit time. This method can not only dynamically adjust the power consumption of the wireless battery management system, but also be compatible with its wireless communication requirement.

It should be noted that although the steps in the above flowcharts are shown in sequence as indicated by the arrows, these steps are not necessarily performed in sequence as indicated by the arrows. The execution order of these steps is not strictly limited, and these steps may be executed in other orders, unless clearly described otherwise.

In another embodiment, as shown in FIG. 4, a second aspect of the present application provides an adaptive low-power management system, including an application scenario determining module 10 and a communication protocol selection module 20.

The application scenario determining module 10 is configured to determine an application scenario of a wireless battery management system. The application scenario includes at least a user mode, a storage mode, and a factory mode. The application scenario determining module 10 is specifically configured to:
determine the application scenario based on a status of a wireless communication network in the wireless battery management system.

When the wireless communication network transitions from a connected state to a disconnected state within a first preset time period, the application scenario is the factory mode.

When the wireless communication network is in the connected state within a second preset time period, the application scenario is the user mode.

When the wireless communication network is in a disconnected state within a third preset time period, the application scenario is the storage mode.

Specifically, in the present application, application scenarios of the wireless battery management system are classified into the user mode, the storage mode, and the factory mode. The application scenario is determined based on the status of the wireless network. The three different application scenarios have different power consumption. Power consumption of the storage mode is lower than that of the user mode. The power consumption of the user mode is lower than that of the factory mode.

The factory mode is a mode of an entire wireless battery management system product during production. In this stage, to meet a takt time, the system needs to be able to quickly complete wireless networking while satisfying a testing requirement. That is, the wireless communication network needs to transition from the connected state to the disconnected state within the first preset time period. This mode is used only for factory production and assembly. After a wireless communication management system is established, a primary node rapidly establishes the wireless communication network and disconnects the wireless network in a short time. Therefore, communication between the primary node and a secondary node usually lasts no longer than 5 minutes before the primary node is powered off.

The storage mode is a mode of the entire wireless battery management system product in transit. In this stage, the entire system needs to maintain minimal power consumption. In addition, wireless communication management is not required. However, when transitioning from the storage mode to the user mode, it needs to be able to respond to wireless networking quickly. That is, the wireless communication network needs to be in the disconnected state within the third preset time period. In this mode, the primary node does not request wireless communication networking or disconnect the wireless network. Therefore, it is used only for transportation after production and assembly. A transportation time lasts more than one week. In other words, disconnection between the primary and secondary nodes lasts more than one week.

The user mode is a mode in which the wireless battery management system has been installed in a vehicle. Rapid ignition and departure requirements of personnel need to be satisfied. The system needs to be able to quickly complete wireless networking after each power-on of the vehicle. That is, the wireless communication network needs to be in the connected state within the second preset time period. In this mode, the primary node establishes the wireless communication network in a short time, and basically does not disconnect the wireless network. Therefore, it is used only after the system is installed. In this case, the primary and secondary nodes are not powered off, and a connection between the primary and secondary nodes persists continuously.

The first preset time period, the second preset time period, and the third preset time period are not specifically limited herein. However, the second preset time period and the third preset time period are longer than the first preset time period. In a product application cycle, the factory mode occurs earliest, the storage mode occurs in the middle, and the user mode occurs last. In the foregoing method, the application scenario is determined based on the status of the wireless network. Alternatively, the foregoing three application modes may be distinguished based on conditions such as whether networking is required and whether short-term networking and short-term network disconnection are required. For example, a working status flag is set through software calibration. If wireless networking is connected, and storage mode and user mode flags are not set, the factory mode is entered. If wireless networking is disconnected and there is no wireless communication networking request within a specific time after a factory mode flag or the user mode flag is set, the storage mode is entered and the storage mode flag is set. If wireless networking is connected and the storage mode flag is set, the user mode is entered.

There are various methods for determining the application scenario of the wireless battery management system. The present application merely describes several preferred implementations of the present application, but this should not be construed as limiting the patentable scope of the present application. In addition, in the present application, the application scenarios are classified into a plurality of modes based on a product lifecycle, and a different sleep management measure is matched for each mode, to minimize energy consumption of a device while ensuring communication efficiency.

The communication protocol selection module 20 is configured to select a corresponding wireless communication protocol based on the application scenario and perform data communication based on the wireless communication protocol.

When the wireless battery management system is in the storage mode, a first wireless communication protocol is selected. The first wireless communication protocol provides a time base synchronization status with a first preset duration per unit time.

When the wireless battery management system is in the user mode, a second wireless communication protocol is selected. The second wireless communication protocol provides a time base synchronization status with a second preset duration per unit time.

When the wireless battery management system is in the factory mode, a third wireless communication protocol is selected. The third wireless communication protocol provides a time base synchronization status with a third preset duration per unit time.

Specifically, in the present application, an appropriate wireless communication protocol is selected for management based on the application scenario of the wireless battery management system by determining a communication status and a time base synchronization status in an appropriate scenario, to reduce power consumption. The storage mode corresponds to the first wireless communication protocol. The user mode corresponds to the second wireless communication protocol. The factory mode corresponds to the third wireless communication protocol. The first preset duration, the second preset duration, and the third preset duration are not specifically limited herein. However, a communication requirement can be known based on the status of the wireless network in the wireless battery management system in each application scenario, leading to a conclusion that the first preset duration needs to be greater than the second preset duration and the second preset duration needs to be greater than the third preset duration.

The first wireless communication protocol defines that each data packet includes a first preset quantity of superframes and a second preset quantity of synchronization frames per unit time. The superframes are used for data transmission in a wireless communication process. The synchronization frames are used for time base synchronization in the wireless communication process. The second wireless communication protocol defines that each data packet includes the first preset quantity of superframes and a third preset quantity of synchronization frames per unit time. The third wireless communication protocol defines that each data packet includes the first preset quantity of superframes and a fourth preset quantity of synchronization frames per unit time.

In the present application, the appropriate wireless communication protocol may further be determined for management by adjusting quantities of the superframes and synchronization frames included in each data packet per unit time in the appropriate scenario, to reduce the power consumption. In the communication process, each data packet includes specific quantities of superframes and synchronization frames. The superframes are used for data transmission. The synchronization frames are used for time base synchronization of wireless communication. A standard wireless communication frame includes 1 superframe and 3 synchronization frames, with communication cycling at this interval. In the present application, the wireless communication protocol is optimized based on a communication status in each application scenario, and efficient sleep management is implemented. For example, in the factory mode, each data packet includes 1 superframe and 1 synchronization frame; in the storage mode, each data packet includes 1 superframe and 10 synchronization frames; and in the user mode, each data packet includes 1 superframe and 3 synchronization frames. In each application scenario, data is transmitted through the superframe, and different synchronization durations are determined through different quantities of synchronization frames. During synchronization frame transmission, the system is sleeping equivalently, to reduce the power consumption.

The foregoing description is based on adjusting the quantity of synchronization frames, namely, a communication frequency per unit time, to reduce the power consumption. In practice, a same effect can also be achieved by adjusting an interval t. For example, an interframe time can be adjusted by changing a time between synchronization frames to n × t or changing a time between a superframe and a synchronization frame to m × t. Details are not described herein.

In the present application, the wireless communication protocol is selected based on the application scenario of the wireless battery management system such that the wireless battery management system has sleep power consumption with different durations in different application scenarios throughout its lifecycle. A wireless signal transmission frequency and duration are reduced by optimizing the communication protocol. The wireless signal transmission frequency and duration are properly managed, and a more effective algorithm is used to reduce the power consumption of the device.

In an embodiment, FIG. 5 is an apparatus diagram of another adaptive low-power management system, including:
an application scenario determining module 10 configured to determine an application scenario of a wireless battery management system, where the application scenario includes at least a user mode, a storage mode, and a factory mode;
a communication protocol selection module 20 configured to select a corresponding wireless communication protocol based on the application scenario and perform data communication based on the wireless communication protocol;
a signal parameter monitoring module 30 configured to: when the wireless battery management system is in the user mode, monitor a parameter of a wireless communication signal generated when the wireless battery management system interacts with an external device, where the parameter includes a received signal strength and a packet error rate; and
a transmit power adjustment module 40 configured to control a transmit power of the wireless communication signal by adjusting the parameter.

In the present application, when the wireless battery management system is in the user mode, the transmit power of the wireless communication signal is controlled by monitoring the parameter of the wireless communication signal generated when the wireless battery management system interacts with the external device, to dynamically match an adjusted transmit power and wireless communication transceiving quality. This reduces the transmit power while meeting wireless communication quality, to reduce power consumption of the entire system.

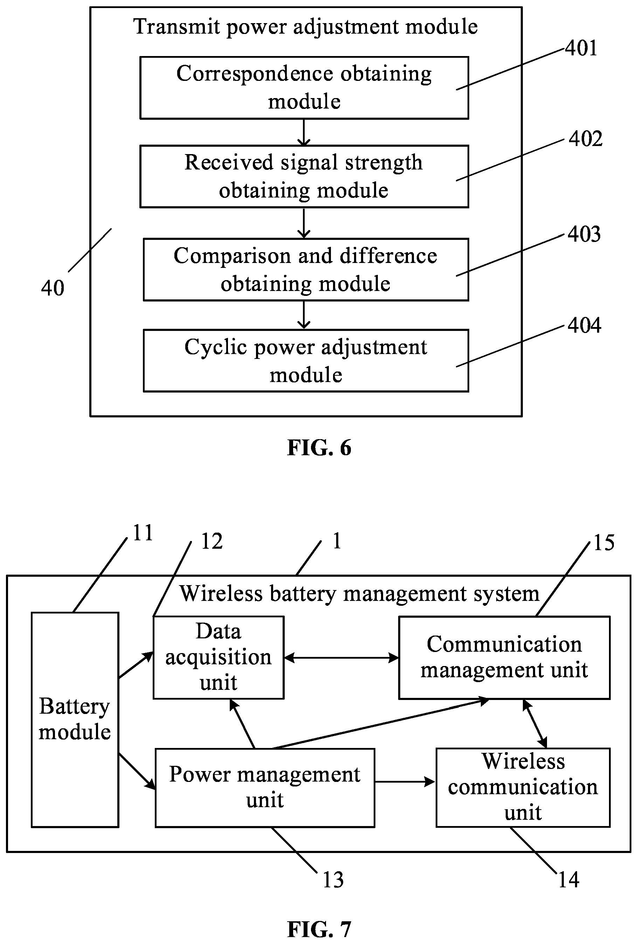

In an embodiment, FIG. 6 is a specific apparatus diagram of the transmit power adjustment module 40, including:
a correspondence obtaining module 401 configured to obtain a correspondence between the parameter and the transmit power of the wireless communication signal;
a received signal strength obtaining module 402 configured to adjust the transmit power of the wireless communication signal until the packet error rate of the wireless communication signal is zero, and obtain a real-time received signal strength of the wireless communication signal at a current moment;
a comparison and difference obtaining module 403 configured to compare the real-time received signal strength with a threshold of the received signal strength of the wireless communication signal and obtain a difference; and
a cyclic power adjustment module 404 configured to adjust the transmit power of the wireless communication signal based on the correspondence and the difference until the difference is zero.

Specifically, after the wireless battery management system is established, if wireless networking is connected, it interacts with a primary node through wireless communication. In this case, the wireless battery management system can monitor a current wireless communication receiving quality RSSI parameter and packet error rate PER parameter. Before expected implementation of this strategy, a correspondence between a wireless transmit power and the wireless communication receiving quality RSSI parameter and packet error rate PER parameter is first investigated. A transmit power of a wireless communication management system can be appropriately reduced while basic requirements for the wireless communication receiving quality RSSI parameter and packet error rate PER parameter are satisfied, to reduce the power consumption of the entire system.

It is assumed that a threshold of the communication receiving quality RSSI parameter is A when basic wireless communication transceiving quality is ensured and the packet error rate PER parameter is zero. A current transmit power is P. When the wireless communication RSSI parameter of a current channel is greater than A, the wireless transmit power can be reduced. The transmit power may be gradually reduced in a mode of (P - 1), k × P, or another relational expression. When the wireless communication RSSI parameter of a current channel is less than A, the wireless transmit power needs to be increased. The transmit power may be gradually increased in a mode of (P + 1), k × P, or another relational expression. k is a corresponding coefficient. Alternatively, the real-time received signal strength is compared with the threshold of the received signal strength of the wireless communication signal to obtain the difference; and the transmit power of the wireless communication signal is adjusted based on the correspondence and the difference until the difference is zero. In this way, the adjusted transmit power and the wireless communication transceiving quality are dynamically matched. In the present application, a transmit power of a device is dynamically adjusted based on a value and change of a communication quality parameter of a current wireless communication channel, to reduce meaningless signal transmission consumption.

It should be noted that the modules in the foregoing adaptive low-power management system may be implemented in whole or in part by software, hardware, or a combination thereof. The modules may be embedded in or independent of a processor of a computer device in a form of hardware, or stored in a memory of the computer device in a form of software, such that the processor can easily invoke and execute corresponding operations of the modules. For specific details regarding the adaptive low-power management system, refer to the foregoing description of the method for adaptive low-power management. Both have same functions and purposes. Details are not described herein again.

A third aspect of the present application provides a wireless battery management system 1, as shown in FIG. 7, including the following units:

A data acquisition unit 12 is configured to acquire first data. The first data includes a voltage and a temperature of a battery module 11. The data acquisition unit 12 is further configured to implement balanced power management between battery cells. A main solution may include all analog front-end chips on the market. It has two operating modes: a working mode and a sleep mode. Its power consumption is within milliamps in working mode and microamps in sleep mode.

A wireless communication unit 14 is configured to perform an operation corresponding to the method for adaptive low-power management according to the first aspect of the present application, and wirelessly transmit the first data acquired by the data acquisition unit 12 to an external device. The wireless communication unit 14 has two operating modes: a working mode and a sleep mode. Its power consumption is within milliamps in working mode and microamps in sleep mode.

A power management unit 13 is configured to manage power supply to the data acquisition unit 12 and the wireless communication unit 14. The power management unit 13 is further configured to supply power to a communication management unit 15. Power consumption of the unit is low in both working mode and sleep mode, and is within microamps.

In an embodiment, the wireless battery management system 1 further includes the communication management unit 15. The communication management unit 15 is configured to manage a communication level between the data acquisition unit 12 and the wireless communication unit 14. A communication mode includes, but is not limited to, serial peripheral interface (SPI), inter-integrated circuit (IIC), universal asynchronous receiver/transmitter (UART), or another common communication mode. The communication management unit 15 is further configured to manage a problem caused by inconsistent communication levels between the data acquisition unit 12 and the wireless communication unit 14. Power consumption of the communication management unit is low in both working mode and sleep mode, and is within microamps.

In summary, the present application provides the wireless battery management system and the adaptive low-power management method and system. In the method for adaptive low-power management, a transmit power of a device is dynamically adjusted based on a value and change of a communication quality parameter of a current wireless communication channel, to reduce meaningless signal transmission consumption. The wireless signal transmission frequency and duration are reduced by optimizing the communication protocol. The wireless signal transmission frequency and duration are properly managed, and a more effective algorithm is used to reduce the power consumption of the wireless battery management system. A wireless communication device takes a better sleep management measure based on a status of the wireless battery management system, to minimize energy consumption of the device while ensuring communication efficiency.

The embodiments in this specification are described in a progressive manner. For same or similar parts between embodiments, reference may be made to each other. Each embodiment focuses on a difference from other embodiments. In particular, for a system embodiment, since it is basically similar to the method embodiment, the description is relatively simple, and reference can be made to the description of the method embodiment. It should be noted that the technical characteristics of the foregoing embodiments can be employed in arbitrary combinations. To provide a concise description of these embodiments, all possible combinations of all the technical characteristics of the foregoing embodiments may not be described; however, these combinations of the technical characteristics should be construed as falling within the scope defined by this specification as long as no contradiction occurs.

The foregoing embodiments are merely illustrative of several preferred implementations of the present application, and the description thereof is more specific and detailed, but is not to be construed as a limitation to the patentable scope of the present application. It should be noted that several improvements and replacements may further be made by those of ordinary skill in the art without departing from the technical principle of the present application, and such improvements and replacements should also be deemed as falling within the protection scope of the present application. Therefore, the protection scope of the present application should be subject to the protection scope of the claims.

## Claims

1. A method for adaptive low-power management, comprising:
determining an application scenario of a wireless battery management system, wherein the application scenario comprises at least a user mode, a storage mode, and a factory mode; and
selecting a corresponding wireless communication protocol based on the application scenario and performing data communication based on the wireless communication protocol; wherein
when the wireless battery management system is in the storage mode, a first wireless communication protocol is selected; and the first wireless communication protocol provides a time base synchronization status with a first preset duration per unit time;
in response to that the wireless battery management system is in the user mode, a second wireless communication protocol is selected; and the second wireless communication protocol provides a time base synchronization status with a second preset duration per unit time; and
in response to that the wireless battery management system is in the factory mode, a third wireless communication protocol is selected; and the third wireless communication protocol provides a time base synchronization status with a third preset duration per unit time.

2. The method for adaptive low-power management according to claim 1, after the selecting a corresponding wireless communication protocol based on the application scenario and performing data communication based on the wireless communication protocol, further comprising:
when the wireless battery management system is in the user mode, monitoring a parameter of a wireless communication signal generated when the wireless battery management system interacts with an external device, wherein the parameter comprises a received signal strength and a packet error rate; and
controlling a transmit power of the wireless communication signal by adjusting the parameter.

3. The method for adaptive low-power management according to claim 2, wherein the controlling a transmit power of the wireless communication signal by adjusting the parameter comprises:
obtaining a correspondence between the parameter and the transmit power of the wireless communication signal;
adjusting the transmit power of the wireless communication signal until the packet error rate of the wireless communication signal is zero, and obtaining a real-time received signal strength of the wireless communication signal at a current moment;
comparing the real-time received signal strength with a threshold of the received signal strength of the wireless communication signal and obtaining a difference; and
adjusting the transmit power of the wireless communication signal based on the correspondence and the difference until the difference is zero.

4. The method for adaptive low-power management according to claim 1, wherein the determining an application scenario of a wireless battery management system comprises:
determining the application scenario based on a status of a wireless communication network in the wireless battery management system; wherein
when the wireless communication network transitions from a connected state to a disconnected state within a first preset time period, the application scenario is the factory mode;
when the wireless communication network is in the connected state within a second preset time period, the application scenario is the user mode; and
when the wireless communication network is in a disconnected state within a third preset time period, the application scenario is the storage mode.

5. The method for adaptive low-power management according to claim 1, wherein the first wireless communication protocol defines that each data packet comprises a first preset quantity of superframes and a second preset quantity of synchronization frames per unit time; the superframes are used for data transmission in a wireless communication process, and the synchronization frames are used for time base synchronization in the wireless communication process; the second wireless communication protocol defines that each data packet comprises the first preset quantity of superframes and a third preset quantity of synchronization frames per unit time; and the third wireless communication protocol defines that each data packet comprises the first preset quantity of superframes and a fourth preset quantity of synchronization frames per unit time.

6. An adaptive low-power management system, comprising:
an application scenario determining module configured to determine an application scenario of a wireless battery management system, wherein the application scenario comprises at least a user mode, a storage mode, and a factory mode; and
a communication protocol selection module configured to select a corresponding wireless communication protocol based on the application scenario and perform data communication based on the wireless communication protocol; wherein
when the wireless battery management system is in the storage mode, a first wireless communication protocol is selected; and the first wireless communication protocol provides a time base synchronization status with a first preset duration per unit time;
when the wireless battery management system is in the user mode, a second wireless communication protocol is selected; and the second wireless communication protocol provides a time base synchronization status with a second preset duration per unit time; and
when the wireless battery management system is in the factory mode, a third wireless communication protocol is selected; and the third wireless communication protocol provides a time base synchronization status with a third preset duration per unit time.

7. The adaptive low-power management system according to claim 6, further comprising: a signal parameter monitoring module and a transmit power adjustment module; wherein
the signal parameter monitoring module is configured to: when the wireless battery management system is in the user mode, monitor a parameter of a wireless communication signal generated when the wireless battery management system interacts with an external device, wherein the parameter comprises a received signal strength and a packet error rate; and
the transmit power adjustment module is configured to control a transmit power of the wireless communication signal by adjusting the parameter.

8. The adaptive low-power management system according to claim 7, wherein the transmit power adjustment module comprises a correspondence obtaining module, a received signal strength obtaining module, a comparison and difference obtaining module, and a cyclic power adjustment module;
the correspondence obtaining module is configured to obtain a correspondence between the parameter and the transmit power of the wireless communication signal;
the received signal strength obtaining module is configured to adjust the transmit power of the wireless communication signal until the packet error rate of the wireless communication signal is zero, and obtain a real-time received signal strength of the wireless communication signal at a current moment;
the comparison and difference obtaining module is configured to compare the real-time received signal strength with a threshold of the received signal strength of the wireless communication signal and obtain a difference; and
the cyclic power adjustment module is configured to adjust the transmit power of the wireless communication signal based on the correspondence and the difference until the difference is zero.

9. A wireless battery management system, comprising: a data acquisition unit, a power management unit, and a wireless communication unit; wherein
the data acquisition unit is configured to acquire first data, and the first data comprises a voltage and a temperature of a battery module;
the wireless communication unit is configured to perform the method for adaptive low-power management according to any one of claims 1 to 5, and wirelessly transmit the first data acquired by the data acquisition unit to an external device; and
the power management unit is configured to manage power supply to the data acquisition unit and the wireless communication unit.

10. The wireless battery management system according to claim 9, further comprising: a communication management unit configured to manage a communication level between the data acquisition unit and the wireless communication unit.
